# EUROPEAN PATENT APPLICATION

(11) **EP 2 002 911 A1**
(43) Date of publication of application: **17.12.2008**
(21) Application number: 08104416.6
(22) Date of filing: 14.06.2008
(51) Int. Cl.: B23B 5/16

(54) **Machining head, especially for milling of electrodes, device for removal of chips as well as the unit consisting of the head and the device for the removal of chips.**

(30) Priority: 14.06.2007 PL 38265907
(71) Applicant: Beko GmbH, 44577 Castrop-Rauxel (DE); Laska, Christoph, 74979 Bochum (DE)
(72) Inventor: Laska, Christoph, 74979 Bochum (DE); Siegert, Peter Beko GmbH, 44577 Castrop-Rauxel (DE)
(74) Representative: Rumpel, Alicja

(57) **Abstract**

A machining head (1), especially for milling of electrodes, is formed of two rings (2) and (3) with the machining plates (4) positioned in their inside, and the inside of the head has a form of polyhedron with bevelled and rounded corners (5). The contact edges of the polyhedron forming the inside of the head (1), with the upper and the lower plane of the rings (2) and (3) are bevelled at an angle falling within the range from 0 up 90 degrees, the upper surface of the ring (2) has a form of a wide flange (6), resting on the power unit, where the head (1) is mounted, and on its external surface two pockets (7) are formed, which are positioned one opposite each other. Under the internal surface of the flange (6) there are four seats (9) for machining plates (4), and these seats (9) have a form of perpendicular recesses with internal edges, which are horizontal to the plane of polyhedral hole inside the ring, close to which they are positioned.

## Description

The subject-matter of the invention is the head, the device for removal of milling chips as well as the unit consisting of the head and the device for removal of chips, intended for milling and/or sharpening, especially of electrodes used for point pressure welding or fusion welding of materials.

In the process of fusion or pressure welding with electric current, due to a rapid passage of electric charge, a permanent bonding between two adjacent elements is being formed. The direct cause of such bonding formation is the spot increase in temperature. Because of this, not only the material subject to bonding is being deformed and structurally changed, but also the welding electrodes used in the process themselves.

In the case of traditional wedling with electric arc and covered electrodes, it is a desired effect due to the fact that clearances between materials are filled with the material of the electrode. Additionally, the fluidized cover protects weld point againt air penetration causing formation of corrosion centres.

Unfortunately, in case of more precise works when point pressure or fusion welding is carried out, a permanent shape of the tool used in such an operation is required.

Known and commonly used are different tools for removal of the deformed terminals of welding electrodes applied, for example, in the motor industry. The above cause losses in excess material, which deposits on the striking end and on the sides of an electrode, causing deformation of the electrode and respectively, resulting in its abnormal operation. One group of such devices are milling machines.

The basic element of these machines are sub-assemblies equipped with cutting edges or cutting tools, into the operation zone of which the machined material is being introduced. Depending on needs, the milling cutter may be formed, having a form of a cylinder provided with a different number of machining surfaces.

The example can be the construction disclosed in the patent description PCT/SE94/00221/T-34. This is used for removal of excess material with narrow, precisely determined strips. Determination of road trajectory of the milling cutter face is carried out on the ground of the geometric data determining successive characteristic points of the ready-made product contour. In devices using such types of milling cutters, the material collected as an excess of the form, is rinsed with a cooling medium protecting the milling cutter against damage.

The similar solution is disclosed in the patent PCT/IJ97/00270. The essential difference is the possibility to replace machining plates, forming the milling cutter face. They are mounted in the longitudinal fitting provided with at least one seat, situated within this part, which is not mounted on the machine tool. Another type of devices used for removal of excess material are ring milling cutters, produced as folded heads with replacable machining plates.

Face milling cutter as known according to the patent description PL174518, is composed of several positioned cassettes, which are joined with the rotating case by means of bolts. The method of such joining makes it possible to eccentricically situate elements one against the other, improving functionality of the device. Moreover, the device under operations characterized in the description prevents formation of long, harmful milling chips, breaking them into short sections. Heads of the same or similar construction can be mounted in other devices constituting a prime mover as well as a stabilizer for the material subject to machining.

According to the patent description DE 19817803, the structure enabling removal of unwanted material from the terminal end of the electrode is disclosed. The above mentioned structure consists of the power transmission system and mechanisms of power transmission and the head provided with the machining mechanism. As a result of piston motion transmitting power to gripping jaws, the electrode is simultaneously gripped and sharpened. Cut material leaves the head seat and falls down.

The same way is covered by waste material leaving the device, disclosed in the patent description EP 1518631. Waste material is formed at the moment when into the hole made in the face milling cutter, the electrodes are introduced on both its sides. A lateral surface of the electrode is formed with at least one machining tool situated inside a round hole, whereas a striking end of the electrode is faced with the single milling cutter passing along the diameter of the hole. The hole diameter as well as the the dimension of the hole edge bevelling, help to stabilize and position the electrode terminal in relation to the milling cutter which is moving horizontally. The removed material, similarly to the previous example, falls down.

The similar principle of operation is incorporated into the devices according to the patent description DE 29607927, but in this case there are not machining plates positioned circumferentially, only the cutting edge used for facing of the head of an oblong object subject to machining.

In case of too large volume of chips or clogging of the head mouth, it is necessary to switch off the device and undertake action by the operator or to increase force, pressing the striking end of the electrode to the milling cutter. Then, the electrode itself is subject to machining along with the waste material produced earlier. Nevertheless, such a situation causes stresses resulting from the difference in pressure force between the upper and the lower part of the machining seat. This is why the mechanisms enabling motion of the complete machining unit have been introduced into use in order to eliminate this phenomenon. They can constitute both fastener between the device base or be manufactured as one unit together with a stabilizing support. The example of devices representing the first type are rubber sleeves or springs located between the mounting plate of the base and the machining body. The second type of devices is a little bit more complicated, although this also incorporates the elasticity effect.

The construction of the device for welding electrodes milling as disclosed in the patent description 9414151, in one of the figures shows the face milling cutter operating in accordance with the previously described principle, which is provided with the power unit positioned axially on the telescopic base. In case of irregular pressure exerted on electrodes from the upper or lower part of the device, a motion is realized along the sleeve positioned inside the pipe forming the base. The power unit in this case is fixed directly to the telescope of the base. The head consisting of machining plates, is positioned not coaxially. Over the machining space, a nozzle is introduced by means of a flexible hose, which supplies the air into the milling zone. Velocity of air flow and its direction are adjusted in such a way that milling chips are not falling down on the device casing but are blown off down onto the floor. The telescope of the base is fixed to its permanent part by means of a stranded connection, below which the control unit is situated with the purpose to control the nozzle blowing the chips off.

The machining head, especially for milling of electrodes as well as the device for removal of milling chips and the unit consisting of the head and device for removal of milling chips, is the solution of many problems connected with exploitation of the known devices of such type, among others clogging of working holes with the material under machining or necessity to switch off the device in order to clean it.

The head is formed of at least two rings with at least one machining plate positioned in their inside. Contour of the inside of at least one ring has a form of polyhedron with bevelled and rounded corners. Preferably, contact edges of the polyhedron with the upper and lower plane of the ring/rings are bevelled at the angle falling within the range from 0 up to 90 degrees. The upper or the lower surface of the ring has a form of a wide flange, resting on the power unit with the power seat, where the head is mounted. On its external surface at least one pocket is formed, preferably two, which are preferably positioned one opposite each other.Preferably, if they are not made as ports passing through the body of the ring and/or rings. The external surface of the flange can be made as the uniform plane, but preferably it should be provided with circumferential recesses, mating with devices used for head removal and with sensors counting number of head rotations. Between the external flange and a centre of the ring thickness there is at least one projection, so-called bayonet, to stabilize the head in the power seat. Preferably, it is made in such a way, that it does not form any projection around the ring on its entire circumference.

Under the internal surface of the flange there is at least one seat for machining plate. It has a form of perpendicular recess with internal edges, which are horizontal to a surface of polyhedral hole inside the ring, close to which they are positioned. Preferably, at least one surface of joint introduced into such a seat of the machining plate and the ring, is formed by additional recess/recesses mating with the projection or projections of the machining plate.

At least one machining plate, preferably four machining plates, are situated in the seats formed in the block of the ring/rings. They are shifted in relation to the symmetry axis of the head, preferably towards the direction of rotary motion performed by the head, preferably the distance between them and these axes is from 0 up to 0.8 mm. Preferably, the machining plates have a form enabling additional stablization of the object under machining.

The machining plates are fixed to the ring/rings by means of at least one, preferably four bolts, passing through the structure of at least one ring. The thread on bolts mates with at least one threaded surface (hole) in the ring, which is not provided with any ports. Preferably, the ports are made in a way enabling hiding of bolt heads so that they are not protruding above the surface of the terminal, external ring.

Preferably, one of the machining plates has been provided with the additional machining surface. Preferably, its positioning enables machining of the face of the object under machining, which has been introduced into the inside of the rotating head. Moreover, the machining plates are made as elements symmetrical towards the axis running perpendicularly to the external plane of the plates, which is not engaged in the process of machining.

The head equipped with at least one machining plate, is placed into the power seat, constituting the connection between the head and the power unit, bringing the head in motion. Preferably, the power seat is orientated horizontally. The lower and the upper surfaces of the power seat are provided with additional plates in such a way that enables free lifting and lowering of at least one plate. Preferably, the front part of plates is provided with a recess and the distance between the most narrow points on the plates mounted in this way is equal to ca. 30 mm, preferably 32 mm. This distance corresponds also to the dimension of recess in the fastener, fastening the power unit to the pipe, collecting the chips received in the course of machining. Preferably, the chips are landing in the pipe as blown off with compressed air, supplied for example, from the factory technical gases supply system. Gas supply is connected both to the upper and the lower plate, whereas the gas outlet directs the chips towards the hole in the fastener fixed to the lower plate. The outlet pipe for waste removal situated on the opposite end relative to the plates provided with recesses is connected, preferably in a separable way, with the container for chips received in processes of machining. Preferably, this pipe has been manufactured as a flexible, reinforced element, capable to change its dimensions under loads. The container for chips is situated under the machining head, preferably fixed to the base of the device.

On the opposite (relative to the position of the machining head) end of the power unit, the driving motor is situated. Preferably, this is an electric motor.

The driving motor is positioned not coaxially towards the base of the device. Preferably, the points where the motor is mounted to the power unit are at the same time the points where the bracket connecting the power unit with the base is mounted. Preferably, the bracket is made as an open profile, preferably C-shaped. Preferably, the elasticity of the bracket material enables its undurable deformation under the influence of irregular pressure of fusion welding (pressure welding) electrodes.

Depending on needs and requirements of the technological process, a degree of deformability of the bracket can be additionally increased by means of the application of the additional bracket enabling to damp vibrations and ensuring motion of the entire upper part of the device. Preferably, the additional bracket used to damp vibrations has a form of a shock absorber, preferably the mechanical one, in which springs are the material damping the energy. The additional bracket damping vibrations enables a shift of the upper part of the device both upwards and downwards, and the range of motion corresponds to the maximal displacement of the robot arm performing welding operations during regeneration of welding electrodes terminals.

Irrespective of whether the additional element to damp vibrations is used or not, the complete device performing operations of machining is fixed to the base stabilized on the foundation. This stabilization may be carried out by means of anchoring the base to the floor or twisting the base to the construction elements such as posts or pillars. Preferably, the cross-section of the base has a shape of a circle. Between the floor surface and the upper part of the device performing operation of machining, a handle of the container for milling chips is situated. Preferably, the handle has a form of a clamping ring with a flat fragment placed on it, which is provided with protruding at least two bolts or catches. They are mating with at least two holes formed in the rear wall of the container for chips. Additionally, the container is protected against falling down from the base with a snap fastener constituting an integral part of the container or the handle, or any other interlocking element, working together with the corresponding recess in the structure of the container or the handle.

The unit consisting of the head and the device for removal of milling chips comprises at least three elements. The first element is the head provided with at least one machining plate, the power unit including power transmission mechanisms and the driving motor. The second element is the C-shaped fastener, damping properties of which are strenghtened by the additional bracket positioned between the second part and the base. It is made in a form of at least two overlapping, concentric cylinders, where the inner one is provided with the port. In this port, a mandrel is positioned, along which the motion is performed. In extreme positions the motion of the mandrel is stopped by the springs. They are mounted in a way, that their natural elongation corresponds to the neutral (zero) position, in which the device is waiting for the manipulator equipped with electrodes.

During fusion welding or pressure welding of bodies of cars, on lateral surfaces and on the striking ends of electrodes, deformations are formed which deteriorate quality of connections. That is why it is necessary to remove excess of material to maintain the required shape of electrodes terminals. To this end, close to the work stands of welding manipulators the head should be placed, especially the milling head, especially for welding electrodes, the device for removal of milling chips and fastener connecting the head and the device for removal of milling chips, according to the invention.

The ppropriately programmed manipulator within the definite intervals of time stops fusion welding (pressure welding) operations and directs electrodes to this place, where the device according to the invention has been installed. On reaching the programmed position, terminals of the electrodes are moved underneath the holes of the face milling cutter. Simultaneously, the control unit starts up the head driver and opens the valve supplying compressed air to the machining area. Shift of electrodes into the appropriate location is supported by recesses, situated above and under the power seat. On reaching the appropriate position, the manipulator tightens the electrodes just like in case of the normal operation, but without supplying voltage to their terminals. The shape of the hole inside the head protects it against clogging due to the presence of a large volume of milling waste. Similar facilitation are the contact edges of the polyhedron with the upper and lower plane of the ring/rings, which ensure more precise guidance of the object under machining to the centre of the hole, for example during manual introduction of the element subject to machining. Moreover, such finishing of the internal surface of the head ring/rings enables more precise assembly of at least one machining plate. Elasticity of the bracket fastening the upper part of the devise to the base as well as the additional bracket mounted between the upper part of the device and the base, which is to damp vibrations, enable vertical shifts of the face milling cutter in case of irregular pressure exerted on electrodes.

The moment, a tightening of electrodes is started, lateral sides and striking ends of the electrodes are faced and chips received as a result are blown off with compressed air in direction of the fastener, in which point a flexible outlet pipe removing waste to the container suspended on the base is connected.

The object according to the invention, enables application of any kind of machining plates, and the shape of internal hole prevents clogging of the face milling cutter and damages of the device. It constitutes also an alternative to these devices, which leave a large volume of waste in their environment, as it removes chips at once after their formation.

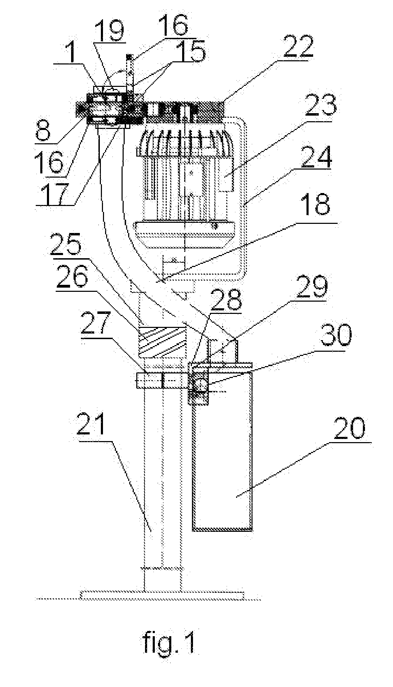

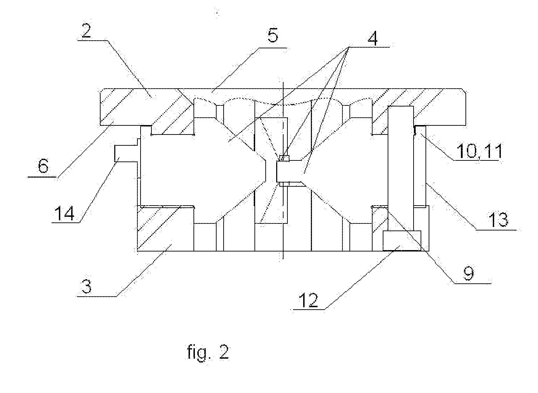

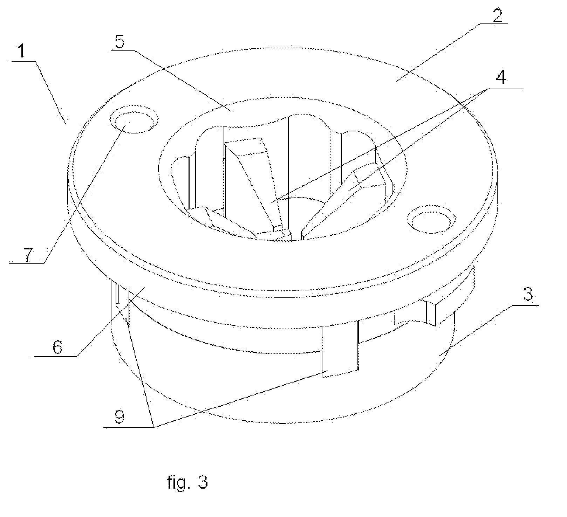

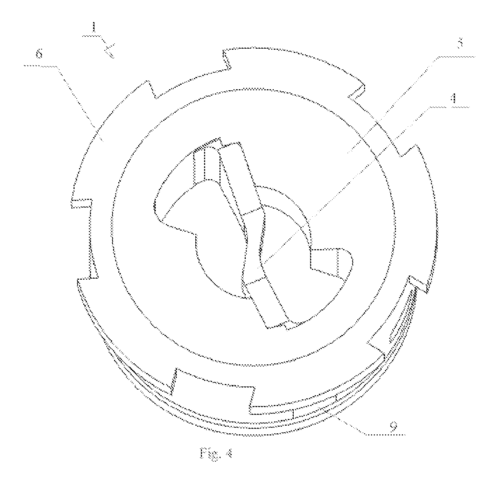

The object according to the invention has been presented in the empdiments in the figures, where Fig.1 presents a view of the device completed by connecting the head, the device for removal of chips and the fastening element, Fig.2 presents a cross-section of the machining head, Fig.3. presents a view of the machining head, Fig. 4 presents a view of the head according to the invention in another example of making.

The head 1 is formed of two rings 2 and 3 with machining plates 4 positioned in their inside. The inside of the ring 1 has a form of polyhedron with bevelled and rounded corners 5. This protects it against clogging due to the presence of a large volume of milling waste. Moreover, such finishing of the internal surface of the rings 2 and 3 of the head 1, enables more precise assembly of the machining plates 4. Contact edges of the polyhedron with the upper and lower surface of the rings 2 and 3 are bevelled at the angle, which ensure more precise guidance of the object under machining to the centre of the hole in the head 1. The upper surface of the ring 2 has a form of a wide flange 6, resting on the power seat 8, where the head 1 is mounted. On the external surface of the flange 6, two pockets 7 are formed, which are positioned one opposite each other. They are not made as ports passing through the body of the flange 6 of the ring 2.

The external surface of the flange 6 is made as the uniform plane. Between the flange 6 and a centre of the ring thickness, there are projections, so-called bayonets 14, to stabilize the head 1 in the power seat 8. The bayonets 14 are made in such a way, that they do not form any projection around the ring on its entire circumference.

Under the internal surface of the flange 6 there are also four seats 9 for the machining plates 4. They have a form of perpendicular recesses with internal edges, which are horizontal to fragments of polyhedral hole inside the ring 1, close to which they are positioned. One surface of contact introduced into such a seat 9 of the machining element 4 and the ring 2 is provided with the additional recess 10, mating with the projections 11 of the machining plate 4.

The machining elements 4 are shifted in relation to the symmetry axis of the head 1, towards the direction of rotary motion performed by the head 1, the distance between these machining plates 5 and these axes is from 0 up to 0.8 mm.

The machining plates 4 are fixed to the ring 2 by means of four bolts 12, passing through the structure of the ring 3. The thread on bolts 12 mates with the threaded surface (hole) in the ring 2, which is not provided with any ports. The ports are made in a way enabling hiding of heads of the bolts 12 so that they are not protruding above the surface of the terminal, external ring 3.

One of the machining plates 4 has been provided with additional machining surface. Its positioning enables machining of the face of the object under machining, which has been introduced into the inside of the rotating head. The machining plates 4 are made as elements symmetrical towards the axis running perpendicularly to the external plane 13 of the elements 4, which is not engaged in the process of machining.

The head 1 equipped with machining plates 4, is placed into the power seat 8, constituting a part of the power unit. The power seat 8 is orientated horizontally. The lower and the upper surfaces of the power seat 1 are provided with the additional plates 15, and the upper plate 15 is mounted in a way enabling its free lifting and lowering. The front part of the plates 15 is provided with the recesses 16 and the distance between the recesses 16 and the plates 15 in the most narrow point is equal to ca. 30 mm. This distance between the external planes of the plates 15 in the widest point corresponds to a width of recess in the fastener, 17 mounted on the lower plate 15. Through the pipe 18, collecting the chips received in the course of machining, it is introduced into the hole 19 of the fastener 17. The wastes are landing in the pipe 18 as blown off with compressed air, supplied from the factory technical gases supply system. Gas supply is connected both to the upper and the lower plates 15, whereas the gas outlet directs the chips towards the hole 19 in the fastener 17 fixed to the lower plate 15. The outlet pipe 18 for waste removal situated on the opposite end in relation to the fastener 17, is connected in a separable way with the container 20 for chips received in processes of machining. This container is situated under the machining head 1 and fixed to the base 21 of the device.

On the opposite (in relation to the position of the machining head 1) end of the power unit 22, the driving motor 23 is situated and this is an electric motor.

The driving motor 23 is positioned not coaxially towards the base 21 of the device. The points where the motor 23 is mounted to the power unit are at the same time the points where the bracket 24 connecting the power unit with the base 21 is mounted. The bracket is made as an open C-shaped profile and the elasticity of the material of the bracket 24 enables its undurable deformation under the influence of irregular pressure of fusion welding (pressure welding) electrodes.

Depending on needs and requirements of the technological process, a degree of deformability of the bracket 24 can be additionally increased by means of the application of the additional bracket 25 to damp vibrations and ensuring motion of the entire upper part of the device in a vertical plane. This element has a form of a shock absorber, in which springs 26 are the material damping the energy. This mechanism enables a shift of the upper part of the device both upwards and downwards, and the range of motions corresponds to the maximal displacement of the robot arm, performing welding operations.

Irrespective of whether the additional bracket 25 to damp vibrations is used or not, the part of the device performing operations of machining, is fixed to the base 21 stabilized on the foundation. This stabilization is carried out by means of anchoring the base to the floor or twisting the base to the construction element, such as posts or pillars. The cross-section of the base has a shape of a circle and between the floor surface and the upper part of the device performing operation of machining, a handle 27 of the container 20 for milling chips is situated. The handle 27 has a form of a clamping ring with a flat fragment and with the end of an outlet pipe for removal of milling chips placed on it. From the flat part of the handle 27, two bolts 28 are protruding. They are mating with two holes 29 formed in the rear wall of the container 28. Additionally, the container 20 is protected against falling down from the base with a snap fastener 30, constituting an integral part of the container.

During fusion welding or pressure welding of bodies of cars, on lateral surfaces and on the striking ends of electrodes, deformations are formed which deteriorate quality of connections. That is why it is necessary to remove excess of material to maintain the required shape of electrodes terminals.

The appropriately programmed manipulator within the definite intervals of time stops fusion welding (pressure welding) operations and directs electrodes to this place, where the device according to the invention has been installed. On reaching the programmed position, terminals of the electrodes are moved underneath the holes of the face milling cutter 1. Simultaneously, the control unit starts up the driver of the head 1 and opens the valve supplying compressed air to the machining area. Shift of electrodes into the appropriate location is supported by recesses in the plates 15 situated above and under the head 1. On reaching the appropriate position, the manipulator tightens the electrodes just like in case of the normal operation, but without supplying voltage to their terminals. Elasticity of the bracket 24, fastening the upper part of the device to the base as well as the additional bracket 25 to damp vibrations mounted between the upper part of the device and the base, enable vertical shifts of the face milling cutter in case of irregular pressure exerted on electrodes.

The moment, a tightening of electrodes is started, lateral sides and striking ends of the electrodes are faced, and chips received as a result are blown off with compressed air in direction of the hole 19 in the fastener 17. The fastener 17 is at the same time the point, where the flexible outlet pipe 18 removing waste to the container 20 suspended on the base 21 is connected.

In another example of making, the head 1 is formed of two rings 2 and 3 with machining plates 4 positioned in their inside, which are connected together. Connection of the plates 4 is performed in such a way, that they form one machining surface. The inside of the head 1 has a form of polyhedron with bevelled and rounded corners 5. This protects the head against clogging due to the presence of a large volume of milling waste. Moreover, such finishing of the internal plane of the rings 2 and 3 of the head 1 enables more precise assembly of the machining plates 4. Contact edges of the polyhedron with the upper and lower surface of the rings 2 and 3 are bevelled at the angle, which ensure more precise guidance of the object under machining to the centre of the hole in the head 1. The upper surface of the ring 2 has a form of a wide flange 6, resting on the power seat 8, where the head 1 is mounted.

The external surface of the flange 6 is made as the uniform surface.

Under the internal surface of the flange 6 there is the seat 9 for the connected machining plates 4. They have a form of perpendicular recesses with internal edges, which are horizontal to fragments of polyhedral hole inside the ring 1, close to which they are positioned. One surface of joint introduced into such a seat 9 of the machining element 4 and the ring 2 is provided with the additional recess 10, mating with the projections 11 of the machining plate 4.

The machining elements 4 are shifted in relation to the symmetry axis of the head 1, towards the direction of rotary motion performed by the head 1, the distance between these machining plates 5 and these axes is from 0 up to 0.8 mm.

The connected machining plates 4 are fixed to the ring 2 by means of bolts 12, screwed in perpendicular to the connected machining plates 4.

The head 1 equipped with machining plates 4, is placed into the power seat 8, constituting a part of the power unit. The power seat 8 is orientated horizontally. The lower and the upper surfaces of the power seat 1 are provided with additional plates 15, and the upper plate 15 is mounted in a way enabling its free lifting and lowering. The front part of plates 15 is provided with the recesses 16 and the distance between the recesses 16 and the plates 15 in the most narrow point is equal to ca. 30 mm. This distance between the external planes of the plates 15 in the widest point corresponds to a width of recess in the fastener 17 mounted on the lower plate 15. Through the pipe 18, collecting the chips received in the course of machining, it is introduced into the hole 19 of the fastener 17. The wastes are landing in the pipe 18 as blown off with compressed air, supplied from the factory technical gases supply system. Gas supply is connected both to the upper and the lower plates 15, whereas the gas outlet directs the chips towards the hole 19 in the fastener 17 fixed to the lower plate 15. The outlet pipe 18 for waste removal situated on the opposite end in relation to the fastener 17, is connected in a separable way with the container 20 for chips received in processes of machining. This container is situated under the machining head 1 and fixed to the base 21 of the device.

On the opposite (in relation to the position of the machining head 1) end of the power unit 22, the driving motor 23 is situated and this is an electric motor.

The driving motor 23 is positioned not coaxially towards the base 21 of the device. The points where the motor 23 is mounted to the power unit are at the same time the points where the bracket 24 connecting the power unit with the base 21 is mounted. The bracket is made as an open C-shaped profile and the elasticity of the material of the bracket 24 enables its undurable deformation under the influence of irregular pressure of fusion welding (pressure welding) electrodes.

Depending on needs and requirements of the technological process, degree of deformability of the bracket 24 can be additionally increased by means of the application of the additional bracket 25 to damp vibrations and ensuring motion of the entire upper part of the device in a vertical plane. This element has a form of a shock absorber, in which springs 26 are the material damping the energy. This mechanism enables a shift of the upper part of the device both upwards and downwards, and the range of motions corresponds to the maximal displacement of the robot arm, performing welding operations.

Irrespective of whether the additional bracket 25 to damp vibrations is used or not, the part of the device performing operations of machining, is fixed to the base 21 stabilized on the foundation. This stabilization is carried out by means of anchoring the base to the floor or twisting the base to the construction element, such as posts or pillars. The cross-section of the base has a shape of a circle and between the floor surface and the upper part of the device performing operation of machining, a handle 27 of the container 20 for milling chips is situated. The handle 27 has a form of a clamping ring with a flat fragment and with the end of an outlet pipe for removal of milling chips placed on it. From the flat part of the handle 27, two bolts 28 are protruding. They are mating with two holes 29 formed in the rear wall of the container 28. Additionally, the container 20 is protected against falling down from the base with a snap fastener 30, constituting an integral part of the container.

During fusion welding or pressure welding of bodies of cars, on lateral surfaces and on the striking ends of electrodes, deformations are formed which deteriorate quality of connections. That is why it is necessary to remove excess of material to maintain the required shape of electrodes terminals.

The appropriately programmed manipulator within the definite intervals of time stops fusion welding (pressure welding) operations and directs electrodes to this place, where the device according to the invention has been installed. On reaching the programmed position, terminals of the electrodes are moved underneath the holes of the face milling cutter 1. Simultaneously, the control unit starts up the driver of the head 1 and opens the valve supplying compressed air to the machining area. Shift of electrodes into the appropriate location is supported by recesses in the plates 15 situated above and under the head 1. On reaching the appropriate position, the manipulator tightens the electrodes just like in case of the normal operation, but without supplying voltage to their terminals. Elasticity of the bracket 24, fastening the upper part of the devise to the base as well as the additional bracket 25 to damp vibrations mounted between the upper part of the device and the base, enable vertical shifts of the face milling cutter in case of irregular pressure exerted on electrodes.

The moment, a tightening of electrodes is started, lateral sides and striking ends of the electrodes are faced, and chips received as a result are blown off with compressed air in direction of the hole 19 in the fastener 17. The fastener 17 is at the same time the point, where the flexible outlet pipe 18 removing waste to the container 20 suspended on the base 21 is connected.

## Claims

1. The machining head, especially for milling of electrodes, **characterized in that** it is formed of two rings (2) and (3) with the machining plates (4) positioned in their inside, and the inside of the head has a form of polyhedron with bevelled and rounded corners (5).

2. The head according to the claim 1, **characterized in that** the contact edges of the polyhedron forming the inside of the head, with the upper and the lower plane of the rings (2) and (3) are bevelled at the angle falling within the range from 0 up 90 degrees.

3. The head according to the claims 1 or 2, **characterized in that** the upper surface of the ring (2) has a form of a wide flange (6), resting on the power unit (22), where the head (1) is mounted, and on its external surface two pockets (7) are formed, which are positioned one opposite each other.

4. The head according to the claim 3, **characterized in that** the pockets (7) are made as unpassable ports through the body of the ring (2).

5. The head according to the claims 3 and 4, **characterized in that** the external surface of the flange (6) is made as the uniform plane, and between the flange (6) and a centre of the ring thickness there are projections, so-called bayonets (14) to stabilize the head in the power seat (8).

6. The head according to the claim 5, **characterized in that** the bayonets (14) are made in such a way, that they do not form any projection around the ring on its entire circumference.

7. The head according to the claims 5 or 6, **characterized in that** under the internal surface of the flange (6) there are four seats (9) for machining plates (4), and that these seats (9) have a form of perpendicular recesses with internal edges, which are horizontal to the plane of polyhedral hole inside the ring, close to which they are positioned.

8. The head according to the claim 7, **characterized in that** one surface of the joint introduced into the seat (9) of the machining plate (4) and the ring (2), has been provided with additional recesses (10) mating with the projections (11) of the machining plate (4).

9. The head according to the claim 8, **characterized in that** machining elements (4) are shifted in relation to the symmetry axis of the head (1), towards the direction of rotary motion performed by the head (1), and the distance between them and these axes is from 0 up to 0.8 mm.

10. The head according to the claim 9, **characterized in that** machining plates (4) are fixed to the ring mocowane sa do pierścienia (2) by means of four bolts (12), passing through the structure of the ring (3), and the thread on bolts (12) mates with the threaded surface (hole) in the ring (2), which is not provided with any ports.

11. The head according to the claim 10, **characterized in that** one of the machining plates (4) has been provided with the additional machining surface.

12. The head according to the claim 11, **characterized in that** the machining plates (4) are made as elements symmetrical towards the axis running perpendicularly to the external surface (13) of the machining plates (4), which is not engaged in the process of machining.

13. The head according to the claims 1 to 10, **characterized in that** it consists of two machining plates (4), which are connected together in such a way, that they form one machining surface.

14. The device for remowal of milling chips, **characterized in that** the head (1), equipped with the machining plates (4), is placed into the power seat (8), constituting a connection between the head (1) and the power unit (22) bringing in morion the head (1), and the power seat (8) is orientated horizontally, and both the upper and the lower surface of the power unit (22) on the side of the power seat (8) has been provided with additional plates (15), and the way of mounting of the plates (15) enables their free lifting and lowering; the front part of the plates (15) has been provided with recesses (16), and the distance between the plates (15) in the most narrow point is falling within the range of 28 up to 34 mm.

15. The device according to the claim 13, **characterized in that** the distance between the plates (15) in thier widest point corresponds to a width of recess in the fastener (17), connecting the head with the pipe (18), collecting the chips received in the course of machining.

16. The device according to the claims 13 or 14, **characterized in that** the chips are blown off with compressed air.

17. The device according to the claims 13 or 14 or 15 **characterized in that** compressed air is supplied to both plates znamienne tym, (15) and directed in such a way, that the chips are moved towards the hole (19) in the fastener (17) fixed to the lower plate (15), and the outlet pipe (18) for waste removal situated on the opposite end in relation to the fastener (17), is connected in a separable way with the container (20).

18. The device according to the claim 16, **characterized in that** the container (20) is situated under the machining head (1) and fixed to the base (21) of the device.

19. The device according to the claim 17, **characterized in that** the base (21) cross-section has a shape of a circle, and between the floor surface and the upper of the device performing operation of machining, a handle (27) of the container (20) for milling waste is situated.

20. The device according to the claim 18, **characterized in that** the handle (27) has a form of a camping ring with a flat fragment and with the end of an outlet pipe (18) for removal of milling chips placed on it, and with two bolts (28) protruding from the flat part of the handle (27), which mate with two holes (29) formed in the rear wall of the container (20).

21. The device according to the claim 19, **characterized in that** the container (20) is fastened to the base with a snap fastener (30).

22. The unit consisting of the head and the device for removal of milling chips, **characterized in that** the driving motor (23), being an electric motor driving the head (1), is positioned not coaxially towards the (21), and the points where the motor (23) is mounted to the power unit (22) are at the same time the points where the bracket (24) connecting the device with the base (21) is mounted.

23. The unit according to the claim 21, **characterized in that** the bracket (24) has been made as an open, C-shaped profile.

24. The unit according to the claim 22, **characterized in that** the elasticity of the material of the bracket (24) is adjusted in a way to enable undurable deformation dunder the influence of irregular pressure exerted by fusion welding (pressure welding) elements, and degree of deformability of the bracket (24) is additionally increased by means of the application of the additional bracket 25 to damp vibrations, in which the springs (26) are the damping material.

25. The unit according to the claims 22 or 23, **characterized in that** the part of the device performing operations of machining, is fixed to the base (21) stabilized on the foundation by anchoring of the base (21) to the floor or twisting the base (21) to construction elements, such as posts or pillars.

26. The unit according to the claims 22 or 23 or 24, **characterized in that** the base (21) cross-section a shape of a circle, and between the floor surface and the upper part of the device performing operation of machining, a handle (27) of the container (20) for milling waste is situated.

27. The unit according to the claim 25, **characterized in that** the handle (27) has a form of a camping ring with a flat fragment and with the end of an outlet pipe (18) for removal of milling chips placed on it, and with two bolts (28) protruding from the flat part of the handle (27), which mate with two holes (29) formed in the rear wall of the container (20).

28. The unit according to the claim 26, **characterized in that** the container (20) is fastened to the base with a snap fastener (30).
